(19) Europäisches Patentamt
European Patent Office
Office européen des brevets

(11) Publication number : **0 499 482 A1**

(12) **EUROPEAN PATENT APPLICATION**

(21) Application number : **92301230.6**

(22) Date of filing : **14.02.92**

(51) Int. Cl.$^5$ : **C09K 19/46,** C09K 19/42

(30) Priority : **15.02.91 JP 22266/91**

(43) Date of publication of application :
**19.08.92 Bulletin 92/34**

(84) Designated Contracting States :
**DE FR GB NL**

(71) Applicant : **SHARP KABUSHIKI KAISHA**
**22-22 Nagaike-cho Abeno-ku**
**Osaka 545 (JP)**

(71) Applicant : **Daiso Co., Ltd.**
**10-8, Edobori 1-chome Nishi-ku**
**Osaka (JP)**

(72) Inventor : **Koden, Mitsuhiro**
**30-503, 5-2-1, Suzaku, Nara-shi,**
**Nara-ken, (JP)**
Inventor : **Taniguchi, Tsugiko**
**229-9, Hikida, Shinjyo-cho, Kitakatsuragi-gun,**
**Nara-ken (JP)**
Inventor : **Sakaguchi, Kazuhiko**
**2-7-1-211, Minamsakurazuka, Toyonaka-shi**
**Osaka, (JP)**
Inventor : **Shiomi, Yutaka**
**2-81, Motohama-cho, Amagasaki-shi**
**Hyogo-ken, (JP)**

(74) Representative : **Ablewhite, Alan James et al**
**MARKS & CLERK 57/60 Lincoln's Inn Fields**
**London WC2A 3LS (GB)**

(54) **Ferroelectric liquid crystal compositions and use thereof.**

(57) A ferroelectric liquid crystal composition including : at least one compound of the formula (I) :

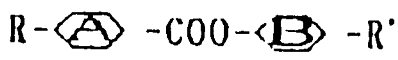

( I )

[where - A - represents 1,4-phenylene or 1,4-cyclohexylene group ; - B - represents 1,4-phenylene or 2,6-naphthylene group ; and R and R′ are, the same or different, a substituted or unsubstituted straight or branched chain alkyl or alkoxy group having 4-15 carbon atoms],
at least one compound of the formula (II) :

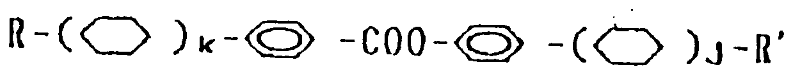

( II )

[where k and j are 0 or 1 and k + j = 1 ; and R and R′ have the same meaning as defined in the formula (I)] and a compound selected from the group consisting of a compound of the formula (IV) :

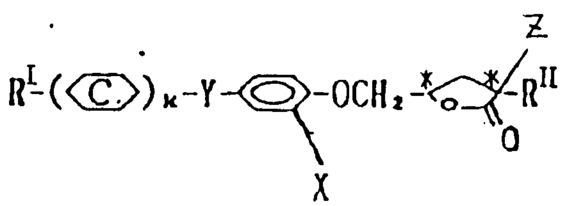

(IV)

[where $R^I$ represents a substituted or unsubstituted straight or branched chain alkyl or alkoxy group having 1-15 carbon atoms ; $R^{11}$ represents a straight or branched chain alkyl group ;

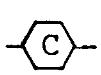

represents 1,4-cyclohexylene, 1,4-phenylene or 2,5-pyrimidinylene group ; X is a hydrogen or halogen atom or a cyano group ; Y is -COO- or a single bond ; Z is a hydrogen atom or a methyl group ; k is 0 or 1 ; and * represents an asymmetric carbon atom]
and a compound of the formula (V) :

EP 0 499 482 A1

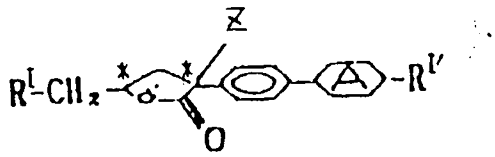 (V)

[where $R^1$ and $R^{1'}$ are each a substituted or unsubstituted straight or branched chain alkyl or alkoxy group having 1-15 carbon atoms ;

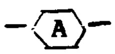

is 1,4-cyclohexylene or 1,4-phenylene group ; is a hydrogen atom or a methyl group ; and * represents an asymmetric carbon atom].

## FIELD OF THE INVENTION

This invention relates to ferroelectric liquid crystal compositions and use thereof. The ferroelectric liquid crystal compositions according to the invention are highly useful in large-capacity liquid crystal display devices.

## RELATED ART

As a known ferroelectric liquid crystal composition, there is a mixture of a pyrimidine achiral compound having a low viscosity and exhibiting smectic C phase and chiral compounds of the following formulae (VII) and (VIII) exhibiting spontaneous polarization [Ohnishi et al., National Technical Report, 33,35 (1987)].

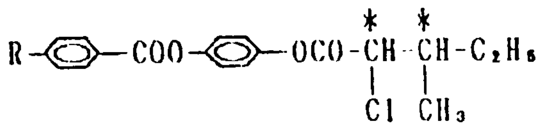

(VII)

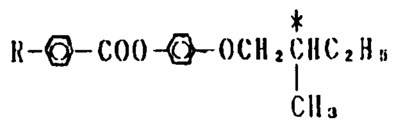

(VIII)

Ferroelectric liquid crystal compositions are capable of implementing large-capacity display devices with a high response speed (a speed at which the arrangement of liquid crystal molecules changes with change of an electric field), because they exhibit a chiral smectic C phase, a chiral smectic I phase and a like phase and have good memory properties. Accordingly, attention is paid to the ferroelectric liquid crystal compositions as promising means for implementing a large-capacity liquid crystal display device having more than 2000 x 2000 lines. Such a display device is far larger in capacity than a small-capacity display device having about 800 x 1024 lines which is now prevailing. Higher and higher resolution is needed for the large-capacity liquid crystal display device. Particularly in DTP (Desk Top Publishing), EWS (Engineering Work Station) and a like field, what is displayed needs to be identical with what is printed out. For example, a liquid crystal device is required to have more than 2000 x 2000 lines in at least A4-size screen for cooperation with a laser printer having a resolution of about 400 DPI (400 dot/inch) which is now in practical use.

Further, the large-capacity liquid crystal display device should clear a problem of flickering prone to occur in the display screen. For this purpose a localized rewriting method has been proposed as an improved driving method for a large-capacity liquid crystal display device utilizing a ferroelectric liquid crystal composition with a high response speed (Kanbe, The Institute of Electronics, Information and Communication Engineers Expert Training Meeting Lecture Papers "Optoelectronics" -Liquid Crystal Display and The Material Thereof-, January 1990, pp. 18-26; Japanese Unexamined Patent Publication No. 59389/1989), wherein a signal is applied only to a localized portion of display on the screen which is intended to rewrite, instead of rewriting the entire display on the screen.

According to the localized rewriting method, a bias voltage which is one-third of the writing voltage is applied to pixels not to be rewritten (this method is hereinbelow referred to as 1/3 bias driving method). The problem in this 1/3 bias driving method is that since 1/3 bias voltage is also applied to the pixels not to be rewritten, this bias voltage causes molecules in the pixels to tremble, thereby decreasing contrast. For example, a conventional ferroelectric liquid crystal display device experimentally fabricated for the localized rewriting method offers a contrast of only 5 : 1 (Kanbe, The Institute of Electronics, Information and Communication Engineers Expert Training Meeting Lecture Papers "Optoelectronics" -Liquid Crystal Display and The Material Thereof-, January 1990, pp. 18-26). Our inventors tried to fabricate various display devices driven by the 1/3 bias driving method and using many ferroelectric liquid crystals including ferroelectric liquid crystal compositions which contain a pyrimidine compound as a main component. These devices, however, offered a poor contrast as low as 1.5-5, and were hence far from satisfactory devices for sales on the market.

## SUMMARY OF THE INVENTION

The present invention has been accomplished in view of the above situation, and aims to provide ferroelectric liquid crystal compositions capable of implementing a high contrast and large-capacity liquid crystal display

device with a high response speed and free from flickering.

Thus, the present invention provides a ferroelectric liquid crystal composition comprising:

at least one compound of the formula (I):

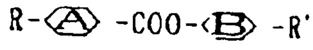
( I )

[where - A - represents 1,4-phenylene or 1,4-cyclohexylene group; - B - represents 1,4-phenylene or 2,6-naphthylene group; and R and R′ are, the same or different, a straight or branched chain alkyl or alkoxy group having 4-15 carbon atoms]

at least one compound of the formula (II):

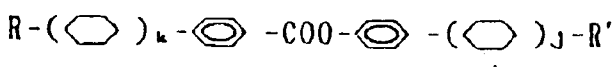
( II )

[where k and j are 0 or 1 and k + j = 1; and R and R′ have the same meaning as defined in the formula (I)]

and

at least one compound selected from the group consisting of a compound of the formula (IV):

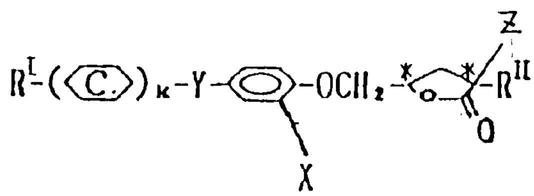
(IV)

[where $R^I$ represents a straight or branched chain alkyl or alkoxy group having 1-15 carbon atoms; $R^{II}$ represents a straight or branched chain alkyl group;

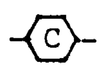

represents 1,4-cyclohexylene, 1,4-phenylene or 2,5-pyrimidinylene group; X is a hydrogen or halogen atom or a cyano group; Y is -COO- or a single bond; Z is a hydrogen atom or a methyl group; k is 0 or 1; and * represents an asymmetric carbon atom]

and a compound of the formula (V):

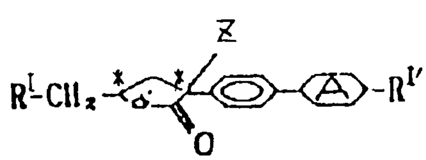
(V)

[where $R^I$ and $R^{I'}$ are each a straight or branched chain alkyl or alkoxy group having 1-15 carbon atoms;

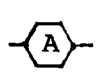

is 1,4-cyclohexylene or 1,4-phenylene group; Z is a hydrogen atom or a methyl group; and * represents an asymmetric carbon atom].

The present invention further provides a ferroelectric liquid crystal display device using the above liquid crystal composition.

BRIEF DESCRIPTION OF THE DRAWINGS

FIG. 1 is a section for schematically illustrating a ferroelectric liquid crystal display device using a ferroelectric liquid crystal composition according to the invention;

FIG. 2 is an explanatory view for schematically showing an arrangement of electrodes in a large-capacity ferroelectric liquid crystal display device according to the invention;

FIG. 3 is a diagram for showing driving voltage waveforms in a 1/3 bias driving method applied to a ferroelectric liquid crystal display device according to the invention; and

FIG. 4 is a diagram for showing a 1/3 bias driving voltage waveform applied to a ferroelectric liquid crystal display device for measuring the contrast of the device.

DETAILED DESCRIPTION OF THE PREFERRED EMBODIMENTS

The ester compounds of the above formulae (I) and (II) are known compounds, but have not so far been used as a main component in a liquid crystal composition exhibiting a high response speed due to their high viscosity. The present inventors discovered the fact that the use of the ester compounds (I) and (II) as a main component in a ferroelectric liquid crystal composition enables to obtain a high contrast in the case of employing a 1/3 bias driving method. Further, the present inventors succeeded in obtaining a ferroelectric liquid crystal composition exhibiting both a high contrast and a high response speed by combining the compounds (I) and (II) with an optically active compound of the formula (IV) or (V) having a γ-lactone ring. In this combination the high viscosity, a shortcoming of the compounds (I) and (II), is made up for.

In the definitions of the formulae (I) and (II), the straight or branched chain alkyl or alkoxy group having 4-15 carbon atoms is an alkyl group such as butyl, i-butyl, pentyl, 1- or 2-methylbutyl, hexyl, 1- or 3-methylpentyl, heptyl, 1- or 4-methylhexyl, octyl, 1-methylheptyl, nonyl, 1- or 6-methyloctyl, decyl, 1-methylnonyl, undecyl, 1-methyldecyl, dodecyl, 1-methylundecyl or the like, or an alkoxy group derived from one of those alkyl groups. The alkyl or alkoxy group may have an asymmetric carbon in a carbon chain. Further, one or more hydrogen atoms in the alkyl or alkoxy group may be substituted with fluorine, chlorine or bromine atoms or cyano, nitro, trifluoromethyl or methoxy groups or the like. The compounds (I) and (II) can be prepared by a known method.

In the definitions of the formulae (IV) and (V), the straight or branched chain alkyl or alkoxy group having 1-15 carbon atoms is an alkyl group such as methyl, ethyl, propyl, butyl, i-butyl, pentyl, 1- or 2-methylbutyl, hexyl, 1-or 3-methylpentyl, heptyl, 1- or 4-methylhexyl, octyl, 1-methylheptyl, nonyl, 1- or 6-methyloctyl, decyl, 1-methylnonyl, undecyl, 1-methyldecyl, dodecyl, 1-methylundecyl or the like, or an alkoxy group derived from one of these alkyl groups. The alkyl or alkoxy group may have an asymmetric carbon in a carbon chain. Further, one or more hydrogen atoms in the alkyl or alkoxy group may be substituted with fluorine, chlorine or bromine atoms or cyano, nitro, trifluoromethyl or methoxy groups or the like. The compound (IV) can be prepared by a method disclosed in Japanese Unexamined Patent Publication No. 138274/1990, while the compound (V) can be prepared by a method disclosed in Japanese Unexamined Patent Publication No. 42535/ 1989.

Described next are preferred compounds of the compounds (I), (II), (VI) and (V).

Examples of the compound (I) include the following compounds:

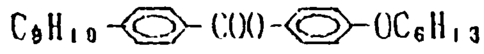
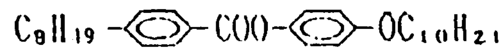
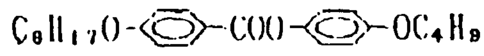
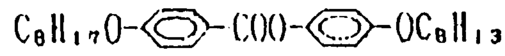
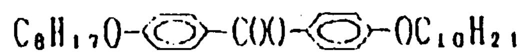
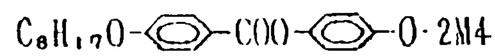
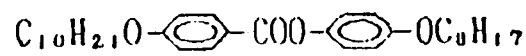
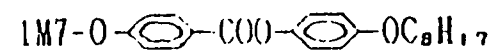
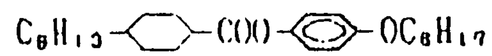
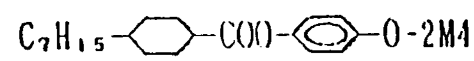
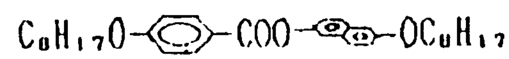
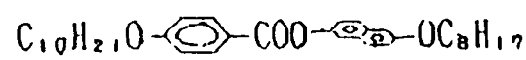
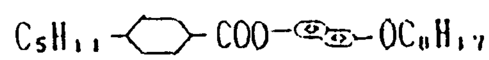

[where 2M4 and 1M7 represent 2-methylbutyl group and 1-methylheptyl group, respectively].

Examples of the compound (II) include the following compounds:

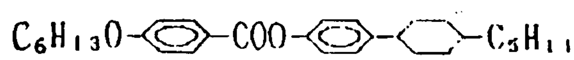
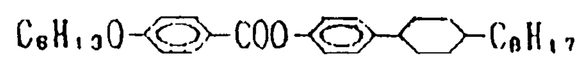
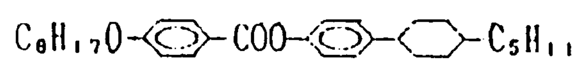
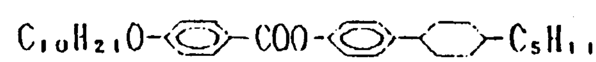
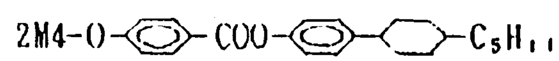
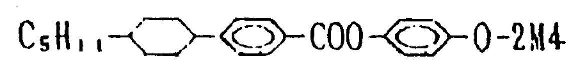
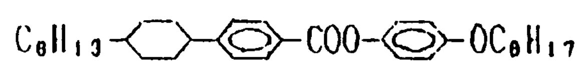

[where 2M4 represents 2-methylbutyl group].

Examples of the compound (IV) include compounds appearing in literature references [for example, Japanese Unexamined Patent Publication No. 110189/1990, Japanese Unexamined Patent Publication No.

138274/1990 and Sakaguchi et al., 59th Spring Meeting Transaction of Japanese Chemical Society, 2E530 (1990)] as well as the compounds shown in Tables 1-8.

Examples of the compound (V) include the compounds shown in Tables 9-10.

The compound (I) has advantages of having a low melting point and exhibiting smectic C phase within a wide temperature range, and can hence be used as a main component of the ferroelectric liquid crystal composition of the invention. The compound (I), however, has a disadvantage of exhibiting no smectic A phase. It is desired that the composition have INAC (Isotropic-Nematic-Smectic A-Smectic C) phase series for obtaining good orientation properties when used in a display device. Therefore, too much content of the compound (I) in the composition is not desired. Accordingly, the content of the compound (I) is preferably 50-80 wt.%, more preferably 60-70 wt.%.

The compound (II), having an advantage of possessing a high transparent point, can serve to raise the upper temperature limit for the liquid crystal phase of the composition. Further, the compound (II) readily exhibits smectic A phase, and hence a combination thereof with the compound (I) at an appropriate ratio enables to realize the INAC phase series. However, the compound (II) has disadvantages of high melting point and high viscosity, resulting in problems of possible precipitation of crystals and the like. Accordingly, too much content of the compound (II) in the composition is not desired. Therefore, the content of the compound (II) in the composition is preferably 5-50 wt.%, more preferably 10-40 wt.%.

The optically active compounds (IV) and (V) can serve to enhance the spontaneous polarization of the composition and the response speed thereof. However, when the content of the compounds (IV) and/or (V) is higher than a suitable content range, there arise problems of increase in viscosity, precipitation of crystals, decrease in thermal stability of smectic C phase and the like. On the other side, when the content thereof is lower than that suitable range, sufficient response speed cannot be assured. Accordingly, the content of the compounds (IV) and/or (V) in the composition is preferably 0.5-20 wt.%, more preferably 1-10 wt.%.

The ferroelectric liquid crystal composition may contain, as well as the compounds (I), (II) and (IV) and/or (V), other liquid crystal compounds, optically active compounds, ionic compounds and the like in appropriate amounts. Among others, a compound (III) readily exhibits smectic A phase, and is hence useful in combination with the compounds (I), (II) and (IV) and/or (V) for realizing the INAC phase series.

Thus, the present invention further provides a ferroelectric liquid crystal composition comprising, as well as the compounds (I), (II) and (IV) and/or (V), at least one compound of the formula (II):

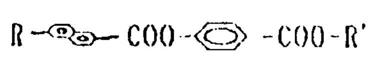 (III)

[where R and R′ are, the same or different, a straight or branched chain alkyl or alkoxy group having 4-15 carbon atoms].

In the definition of the formula (III), R and R′ have the same meanings as defined in the formulae (I) and (II). The compound (III) can be synthesized in accordance with a known method.

Examples of the compound (III) include the following compounds:

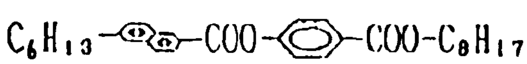

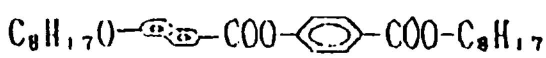

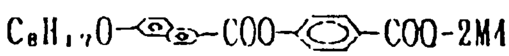

[where 2M4 represents 2-methylbutyl group].

The compound (III), however, is hard to exhibit nematic phase, and hence too much content thereof in the composition may cause the composition to lose nematic phase. Accordingly, the content of the compound (III) is preferably 20 wt.% or less, more preferably 10 wt.% or less.

Now, the description will be made on a ferroelectric liquid crystal device of the invention.

FIG. 1 is a sectional view showing a transmissive type liquid crystal device using the ferroelectric liquid crystal composition of the invention and comprising insulator substrates 1 and 2, transparent electrodes 3 and

4, an insulating film 5, an orientation control layer 6, a sealant 7, a ferroelectric liquid crystal composition 8 and a polarizer 9.

A transparent substrate such as of glass is used as the insulator substrates 1 and 2. On the substrates 1 and 2 are formed respectively the transparent electrodes 3 and 4 of an electric conductive film such as of ITO (Indium-Tin Oxide) or the like, with a desired pattern. The insulating film 5 is usually formed on the electrodes but can be omitted depending on the case. As the insulating film 5 may be used an inorganic-type thin film such as of, for example, $SiO_2$, $SiN_x$ and $Al_2O_3$, or an organic-type thin film such as of, for example, polyimide. The inorganic-type thin film can be formed by means of vapor deposition, sputtering, CVD (chemical vapor deposition), solution coating or the like. On the other hand, the organic-type thin film can be formed by coating a solution of the organic material or its precursor in accordance with spin coating, dip coating, screen printing, roll coating or a like technique, and curing it under predetermined curing conditions (heating, photo-irradiation or the like).

The orientation control layer 6 is formed on the insulating film 5. In the case of omitting the insulating film 5, the orientation control layer 6 is directly formed on the electrodes 3 and 4. The orientation control layer 6 may be of inorganic type or organic type. For forming the inorganic-type orientation control layer, frequently used is oblique evaporation of silicon oxide, and also applicable is rotary evaporation thereof. On the other hand, the organic-type orientation control layer may be formed from a polymer such as nylon, polyvinylalcohol, polyimide, polyamide or the like and is usually rubbed to control orientation.

Finally, the two insulator substrates are arranged opposite to each other and the liquid crystal composition is injected into a space between the substrates, thereby completing the ferroelectric liquid crystal device of the invention.

Although description has been made with reference to a switching device having one pixel as shown in FIG. 1, the ferroelectric liquid crystal composition and liquid crystal device of the invention can be applied to large-capacity matrix displays. In this case electrodes on the upper and lower substrates are combined in a matrix pattern as shown in FIG. 2.

The large-capacity ferroelectric liquid crystal display device using the ferroelectric liquid crystal composition of the invention can be driven by various driving methods as heretofore proposed, for example, a method disclosed in Onishi et al., National Technical Report, 33, pp. 4, (1987). Among such methods, a localized rewriting method in which a 1/3 bias driving method using driving waveforms shown, for example, in FIG. 3 is effective for implementing a large-capacity display without flickering.

Thus, the present invention proposes a liquid crystal display device comprising a substrate for use in a liquid crystal display device, having at least a plurality of scanning electrodes arranged parallel on its surface and another substrate for use in a liquid crystal display device, having at least a plurality of signal electrodes arranged parallel on its surface, both of the substrates being disposed as opposed to each other with a clearance therebetween such that the scanning electrodes and the signal electrodes intersect with each other, the clearance being filled with the ferroelectric liquid crystal composition of the invention;

said display device being driven by a method comprising:

defining ferroelectric liquid crystals in portions where the scanning electrodes and signal electrodes intersect with each other as pixels; and

applying, in line sequence, to the signal electrodes a signal voltage having a waveform corresponding to display data, while to the scanning electrodes a selective voltage having a waveform capable of rewriting the display of the pixels on the scanning electrodes;

wherein voltage that is one-third of that applied to the ferroelectric liquid crystals for rewriting the display of the pixels is applied to pixels of which display are not to be rewritten.

In the case of driving a liquid crystal display device by the 1/3 bias driving method, liquid crystal molecules are trembled by bias voltage, thereby lowering the display contrast. The use of the ferroelectric liquid crystal composition makes it possible to mitigate the trembling of molecules, so that good display contrast can be obtained.

Accordingly, the compounds (I) and (II) constituting the ferroelectric liquid crystal composition of the invention serve to mitigate trembling of pixels in non-rewriting portions due to application of 1/3 bias voltage, thereby enriching the display contrast, while the compounds (IV) and/or (V) enhance the response speed.

EXAMPLES

The present invention will be described in greater detail with reference to the following examples, which are not intended to be limitative of the invention.

Example 1

[Preparation of compositions consisting of the compounds (I) and (II) and of the compounds (I), (II) and (III)]

Achiral liquid crystal compositions Nos. 101-103 shown in Table 12 were prepared using the compounds Nos. 1-11 shown in Table 11. These compositions demonstrated smectic C phase at room temperature. Table 12 also shows the phase transition temperature of each composition. The compositions Nos. 102 and 103 exhibited the INAC phase series, hence desirable. The composition No. 101 did not exhibit smectic A phase, but could be practically used in combination with other compounds.

Example 2

[Measurement of spontaneous polarization direction of the compounds (IV) and (V) and other optical isomer components]

An achiral smectic C liquid crystal composition No. 201 comprising the contents shown in Table 13 was prepared. This liquid crystal composition No. 201 exhibited smectic C phase at room temperature and the phase transition temperature shown in Table 13.

Ferroelectric liquid crystal compositions were prepared by adding to the composition No. 201 each of the optically active compounds Nos. 301-325 shown in Tables 14 and 15 in an amount of 2 wt.%. All of the ferroelectric liquid crystal compositions thus obtained exhibited chiral smectic C phase at room temperature as well as the INAC phase series.

On each of two glass substrates were formed in sequence an ITO film, $SiO_2$ film and PVA film, the PVA film being then rubbed. Subsequently the substrates were bonded together as opposed to each other so as to align the rubbing directions with each other and to have a cell thickness of 2 μm, and the ferroelectric liquid crystal compositions shown in Tables 1-8 were each injected into the cell. After injection, each of the compositions was heated to a temperature at which it transformed into an isotropic liquid and then cooled to room temperature at a rate of 1 °C/min, thus completing a ferroelectric liquid crystal device having good orientation properties.

The ferroelectric liquid crystal device was placed between two polarizers crossing perpendicular to each other, and applied with a rectangular waveform voltage of ±10 V. The direction of molecule movement was visually observed to determine the sense of spontaneous polarization developed by each optically active compound. The result of the observation is shown in Tables 14 and 15.

Example 3

[Measurement of helical pitch of the compounds (IV) and (V) and other optical isomer components]

An achiral nematic liquid crystal composition No. 202 was prepared. The contents and phase transition temperature of the composition are shown in Table 16. This composition No. 202 demonstrated nematic phase at room temperature.

The optically active compounds Nos. 301-325 shown in Tables 14 and 15 were each admixed in an amount of 1 wt.% with the liquid crystal composition No. 202 to prepare chiral liquid crystal compositions. All the liquid crystal compositions thus prepared demonstrated nematic phase at room temperature. The helical pitch of each nematic liquid crystal composition was measured using a wedge cell. Tables 14-15 show 1/P (%) value, which is a reciprocal of the measured pitch.

Example 4

[Measurement of the helical sense of the compounds (IV) and (V) and other optical isomer components]

Nematic liquid crystal compositions were prepared by adding each of the optically active compounds Nos. 301-325 shown in Tables 14 and 15 in an amount of 10-40 wt.% to the nematic liquid crystal composition No. 202.

It has already been reported that the helical sense of the compound No. 324 in the nematic phase assumes R(+) while that of the compound No. 325 assumes L(-) in the same phase.

Then, the nematic liquid crystal compositions respectively admixed with the compounds Nos. 301-323 were respectively brought into contact with nematic liquid crystal compositions admixed respectively with the compounds Nos. 324 and 325 on prepared slides.

Observation of the slides with a polarizing microscope revealed that schlieren structure, which was observed only when the helical pitch was extended very long, appeared only where the composition containing the compound No. 324 or No. 325 was brought into contact. The compounds in which the schlieren structure was observed when brought into contact with the composition containing the compound No. 324 were concluded to induce a helix with L(-) sense in the nematic phase, while the compounds in which the schlieren structure was observed when brought into contact with the composition containing the compound No. 325 were concluded to induce a helix with R(+) sense in the nematic phase. The direction of helical sense induced by each of the compounds Nos. 301-323 in the nematic phase is determined as shown in Tables 14 and 15.

Example 5

[Preparation of ferroelectric liquid crystal composition having a long helical pitch]

The optically active compounds in Tables 14 and 15, the compounds (I)-(III) and the achiral liquid crystal compositions in Table 17 were used to prepare ferroelectric liquid crystal compositions Nos. 401-404.

It is known that the helical pitch in the nematic phase is determined by the following equation of linear additive property [refer to J. E. Adams and W. E. L. Hass, Mol. Cryst. Liq. Cryst., 16, 33 (1972)].

$$1/P = \Sigma(Ci/Pi)$$

where $\Sigma Ci = 1$, P is a pitch of a liquid crystal composition, and Ci is a concentration by weight of each component having an inherent pitch.

The chiral compounds were mixed so as to have liquid crystal compositions having sufficiently long pitches, using the above equation. Reciprocals of pitch values in nematic phase of the ferroelectric liquid crystal compositions thus prepared are shown in Table 18. As seen from Table 18, all the compositions thus prepared exhibited sufficiently long pitches.

Example 6

[Fabrication of ferroelectric liquid crystal display device and measurement of display contrast thereof]

On each of two glass substrates were formed in sequence an ITO film and a PVA film, the PVA film being then rubbed. Subsequently the substrates were bonded together as opposed to each other so as to align the rubbing directions with each other and to have a cell thickness of 2 μm. The ferroelectric liquid crystal compositions in Table 17 were each injected into the cell. After injection, each of the compositions was heated to a temperature at which it transformed into an isotropic liquid and then cooled to room temperature at a rate of 1 °C/min, thus completing a ferroelectric liquid crystal device having good orientation properties.

The ferroelectric liquid crystal device was placed between two polarizers crossing perpendicular to each other and measured with respect to its properties: response speed, tilt angle, memory angle and memory pulse width. Further, the phase transition temperature was measured with a polarizing microscope, while the spontaneous polarization was measured by a triangular wave method [e.g., K. Miyasato, et al., Jpn. J. Appl. Phys., 22, L661, (1983)]. The results of the measurements are shown in Table 18. The response speed was represented by periods of time in which the rate of transmitted light in quantity varied from 0 % to 50 % and 0 % to 90 %, respectively when rectangular pulse voltage (V = ±10 V) was applied to the device at 25 °C. The memory pulse width was defined as a minimum pulse width enabling switching when a pulse waveform voltage (V = ±10 V) was applied to the device at 25 °C. The contrast was found on the basis of the quantity of transmitted light five seconds after the application of voltage of a waveform shown in FIG. 4 to the device placed between two polarizers crossing perpendicular to each other. The result is shown in Table 19.

Example 7

[Fabrication of ferroelectric liquid crystal display device and measurement of contrast thereof]

Ferroelectric liquid crystal display devices were fabricated in the same manner as in Example 6 except that the PVA film was replaced with a polyimide orientation film (LX-1400, a product of Hitachi Chemical Co., Ltd.). Contrast of each device was measured, and the result is shown in Table 19.

Example 8

[Fabrication of ferroelectric liquid crystal display device and measurement of contrast thereof]

Ferroelectric liquid crystal display devices were fabricated in the same manner as in Example 6 except that the PVA film was replaced with a polyimide orientation film (PS1-A-2001, a product of Chisso Petrochemical Corporation). Contrast of each device was measured and the result is shown in Table 19.

As can be understood from the above Examples, a high contrast of 7 to 8 was obtained when the ferroelectric liquid crystal display device using the ester liquid crystal composition of the present invention was driven by the 1/3 driving method. The use of the present invention can provide a large-capacity ferroelectric liquid crystal device which exhibits a high contrast as compared with a conventional device showing a contrast of 1.5 to 5.

Table 1

| Formula | $R^1$ | $R^2$ | Z | N | 2* | 4* | mp (℃) | $[\alpha]_D$ ($CH_2Cl_2$) |
|---|---|---|---|---|---|---|---|---|
| (IV) −1 | $CH_3$ | n-$C_3H_7$ | H | 0 | S | R | 139 | -27.82° (C=1.03) |
| | " | " | " | " | R | R | 117 | -16.82° (C=0.98) |
| | n-$C_9H_{19}$ | " | " | " | S | R | 127 | -23.48° (C=1.027) |
| | " | " | " | " | R | R | 113 | -31.45° (C=1.432) |
| | $CH_3$ | n-$C_5H_{11}$ | " | " | R | S | 101 | +20.25° (C=0.490) |
| | " | " | " | " | S | S | 101 | +14.03° (C=0.493) |
| | $C_2H_5$ | " | " | " | R | S | 99 | +21.24° (C=0.423) |
| | " | " | " | " | S | S | 98 | +29.57° (C=0.165) |
| | n-$C_4H_9$ | " | " | " | R | S | 85 | +20.37° (C=1.05) |
| | " | " | " | " | S | S | 84 | +33.45° (C=0.658) |
| | n-$C_7H_{15}$ | " | " | " | S | S | 110 | +27.61° (C=0.039) |
| | n-$C_{11}H_{23}$ | " | " | " | R | S | 122 | +19.65° (C=1.053) |
| | " | " | " | " | S | S | 105 | +21.64° (C=1.085) |

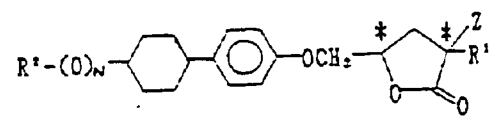

(IV) − 1

Table 2

| Formula | $R^1$ | $R^2$ | Z | N | 2* | 4* | mp (°C) | $[\alpha]_D$ ($CH_2Cl_2$) |
|---|---|---|---|---|---|---|---|---|
| (IV) −7 | $C_2H_5CH(CH_3)(CH_2)_2$ | 〃 | H | 0 | S | S | | |
| | $(CH_3)_2CH(CH_2)_2$ | 〃 | 〃 | 〃 | S | S | | +35.24° (C=0.894) |
| | $CH_3$ | $n-C_9H_{19}$ | 〃 | 〃 | R | S | 102 | +20.00° (C=0.888) |
| | 〃 | 〃 | 〃 | 〃 | S | S | 85 | +16.60° (C=1.03) |
| | $n-C_5H_{11}$ | 〃 | 〃 | 〃 | R | S | 117 | +19.57° (C=1.17) |
| | 〃 | 〃 | 〃 | 〃 | S | S | 98 | +27.52° (C=1.194) |
| (IV) − 2 | $CH_3$ | 〃 | 〃 | 〃 | R | S | 129 | +27.58° (C=1.076) |
| | 〃 | 〃 | 〃 | 〃 | S | S | 125 | +19.20° (C=1.08) |
| | $C_2H_5$ | 〃 | 〃 | 〃 | S | S | | |
| (IV) − 1 | $C_9H_{19}$ | $C_3H_7$ | $CH_3$ | 〃 | R | R | 77 | −25.95° (C=1.013) |
| (IV) − 2 | $C_3H_7$ | $C_8H_{17}$ | 〃 | 〃 | S | R | 95 | +20.76° (C=1.247) |
| (IV) − 2 | 〃 | 〃 | 〃 | 〃 | S | S | 83 | +28.15° (C=1.058) |

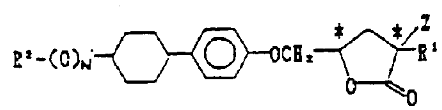

(IV) − 1

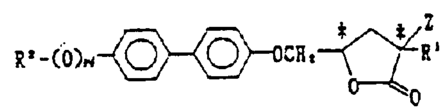

(IV) − 2

Table 3

| Formula | $R^1$ | $R^2$ | Z | N | 2* | 4* | mp (℃) | [α]$_D$ ($CH_2Cl_2$) |
|---|---|---|---|---|---|---|---|---|
| (IV) − 2 | n-$C_6H_{13}$ | n-$C_6H_{13}$ | H | 0 | R | S | 136 | +27.36° (C=0.876) |
| | ″ | ″ | ″ | ″ | S | S | 140 | +37.78° (C=1.048) |
| | n-$C_{10}H_{21}$ | ″ | ″ | ″ | R | S | 132 | +25.56° (C=1.037) |
| | ″ | ″ | ″ | ″ | S | S | 136 | +35.00° (C=1.273) |
| | $CH_3$ | n-$C_8H_{17}$ | ″ | ″ | R | S | 129 | +25.24° (C=1.048) |
| | ″ | ″ | ″ | ″ | S | S | 127 | +17.53° (C=1.039) |
| | n-$C_3H_7$ | ″ | ″ | ″ | R | S | 117 | +22.50° (C=0.504) |
| | ″ | ″ | ″ | ″ | S | S | 115 | +32.67° (C=1.081) |
| | n-$C_9H_{19}$ | ″ | ″ | ″ | R | S | 132 | +22.26° (C=0.826) |
| | ″ | ″ | ″ | ″ | S | S | 134 | +33.29° (C=1.076) |
| | n-$C_{12}H_{25}$ | ″ | ″ | ″ | R | S | 130 | +24.52° (C=1.870) |
| | ″ | ″ | ″ | ″ | S | S | 133 | +31.20° (C=1.010) |

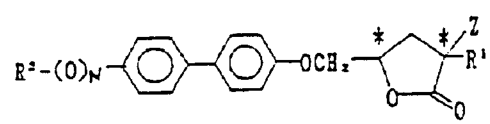

(IV) − 2

Table 4

| Formula | $R^1$ | $R^2$ | Z | N | P | 2* | 4* | mP (°C) | $[\alpha]_D$ . ($CH_2Cl_2$) |
|---|---|---|---|---|---|---|---|---|---|
| (IV) − 2 | $CH_3$ | ″ | H | 1 | − | R | S | 133 | +21.33° (C=0.553) |
| | ″ | ″ | ″ | ″ | − | S | S | 119 | +22.35° (C=0.470) |
| | n-$C_8H_{17}$ | ″ | ″ | ″ | − | S | S | 139 | +28.59° (C=0.674) |
| | n-$C_3H_7$ | $C_6H_{13}CH(CH_3)$ | ″ | 1 | − | S | S | | |
| | n-$C_4H_9$ | n-$C_{12}H_{25}$ | ″ | 0 | − | R | R | 130 | −28.56° (C=1.06) |
| | ″ | ″ | ″ | ″ | − | S | R | 128 | −22.98° (C=1.07) |
| (IV) − 3 | $C_6H_{13}CH(CH_3)$ | n-$C_5H_{11}$ | | ″ | 0 | S | S | | |
| | n-$C_6H_{13}$ | n-$C_8H_{17}$ | | ″ | ″ | -(a) | S | 116 | +37.93° (C=1.024) |
| | $CH_3$ | ″ | | 1 | ″ | R | S | 115 | |
| | n-$C_8H_{17}$ | ″ | | 0 | 1 | S | S | | |

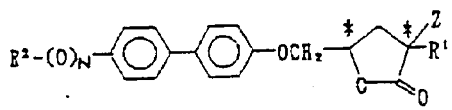

(IV) − 2

(a) : a mixture of (2S, 4S) and (2R, 4S) in the ratio of 9:1

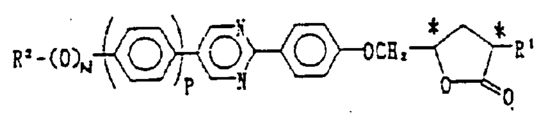

(IV) − 3

Table 5

| Formula | $R^1$ | $R^2$ | N | P | 2* | 4* | mp (°C) | [α]D ($CH_2Cl_2$) |
|---|---|---|---|---|---|---|---|---|
| (IV) − 3 | $CH_3$ | n-$C_8H_{17}$ | 1 | 0 | S | S | 154 | |
| | n-$C_4H_9$ | 〃 | 〃 | 〃 | R | S | 108 | +25.02° (C=0.23) |
| | 〃 | 〃 | 〃 | 〃 | S | S | 130 | +41.04° (C=0.137) |
| | n-$C_7H_{15}$ | 〃 | 〃 | 〃 | R | S | 102 | |
| | 〃 | 〃 | 〃 | 〃 | S | S | 135 | |
| | n-$C_{10}H_{21}$ | 〃 | 〃 | 〃 | R | S | 100 | |
| | 〃 | 〃 | 〃 | 〃 | S | S | 127 | |
| | n-$C_9H_{19}$ | n-$C_{10}H_{21}$ | 0 | 〃 | R | S | 100 | |
| | 〃 | 〃 | 〃 | 〃 | S | S | 139 | |
| | n-$C_{12}H_{25}$ | 〃 | 〃 | 〃 | R | S | 89 | +17.12° (C=0.398) |
| | 〃 | 〃 | 〃 | 〃 | S | S | 127 | +26.01° (C=1.062) |

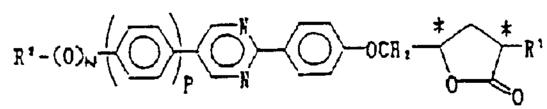

(IV) − 3

Table 6

| FORMULA | $R^1$ | $R^2$ | N | P | 2* | 4* | mp (°C) | $[\alpha]_D$ ($CH_2Cl_2$) |
|---|---|---|---|---|---|---|---|---|
| (IV) -3 | n-$C_5H_{11}$ | n-$C_8H_{17}$ | 1 | 1 | R | S | (b) | |
| | 〃 | 〃 | 〃 | 〃 | S | S | (c) | |
| | n-$C_8H_{17}$ | 〃 | 〃 | 〃 | R | S | (d) | + 7.09° (C=0.115) |
| | 〃 | 〃 | 〃 | 〃 | S | S | (e) | +19.45° (C=0.613) |
| | n-$C_{11}H_{23}$ | 〃 | 〃 | 〃 | R | S | (f) | +11.93° (C=1.180) |
| | 〃 | 〃 | 〃 | 〃 | S | S | (g) | +20.93° (C=1.116) |

(b) : $C \xrightarrow{138} S_mX \xrightarrow{145} S_mC^* \xrightarrow{201} N \xrightarrow{202} I$

(c) : $C \xrightarrow{150} S_mX \xrightarrow{155} S_mC^* \xrightarrow{190} I$

(d) : $C \xrightarrow{126} S_mC^* \xrightarrow{199} I$

(e) : $C \xrightarrow{161} S_mC^* \xrightarrow{186} I$

(f) : $C \xrightarrow{120} S_mX \xrightarrow{133} S_mC^* \xrightarrow{195} I$

(g) : $C \xrightarrow{150} S_mX \xrightarrow{155} S_mC^* \xrightarrow{183} I$

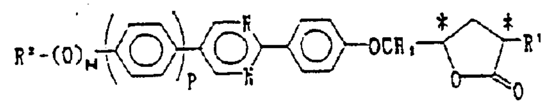

(IV) - 3

Table 7

| Formula | $R^1$ | $R^2$ | N | P | 2* | 4* | mp (℃) | $[\alpha]_D$ ($CH_2Cl_2$) |
|---|---|---|---|---|---|---|---|---|
| (IV) − 4 | n-$C_4H_9$ | 〃 | 〃 | 0 | S | S | 91 | +30.07° (C=1.038) |
| | 〃 | 〃 | 〃 | 〃 | R | S | 93 | +20.00° (C=0.803) |
| (IV) − 4 | n-$C_4H_9$ | n-$C_7H_{15}$ | 1 | 1 | S | S | (h) | +28.77° (C=1.017) |
| (IV) − 5 | | n-$C_5H_{11}$ | 〃 | − | S | S | 85 | +31.89° (C=1.043) |

(h) : C $\xrightarrow{141}$ SmC* $\xrightarrow{147}$ SmA $\xrightarrow{184}$ I

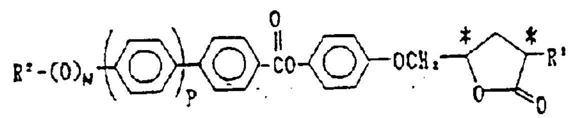

(IV) − 4

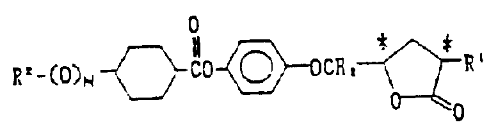

(IV) − 5

Table 8

| Formula | $R^1$ | $R^2$ | N | Z* | 4* | mp (°C) | $[\alpha]_D$ ($CH_2Cl_2$) | $X^1$ |
|---|---|---|---|---|---|---|---|---|
| (IV) - 6 | " | " | — | S | S | 72 | +39.67° (C=1.060) | – |
| (IV) - 7 | n-$C_3H_7$ | n-$C_8H_{17}$ | 0 | R | S | 80 | +18.26° (C=0.87) | CN |
| | " | " | " | S | S | 86 | +31.83° (C=1.09) | " |
| | " | " | " | R | S | 83 | +24.76° (C=1.02) | F |
| | " | " | " | S | S | 92 | +38.17° (C=1.00) | " |
| | $CH_3$ | " | " | R | S | 89 | +27.00° (C=1.02) | " |
| | " | " | " | S | S | 95 | +21.06° (C=1.01) | " |
| | n-$C_3H_7$ | " | 1 | R | S | 100 | +21.51° (C=0.79) | " |
| | " | " | " | S | S | 125 | +38.35° (C=1.02) | " |
| | n-$C_6H_{13}$ | n-$C_{10}H_{21}$ | 0 | S | S | | | " |

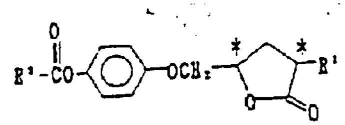
(IY) - 6

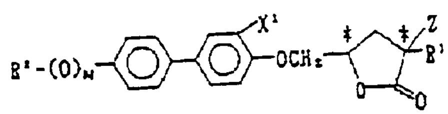
(IY) - 7

Table 9

| $R^{11}$ | $R^{10}$ | $A^7$ | d | f | $X^7$ | 2* | 4* | mp (℃) | $[\alpha]_D$ ($CH_2Cl_2$) | Z |
|---|---|---|---|---|---|---|---|---|---|---|
| $CH_2=CH-CH_2$ | $n-C_4H_9$ | 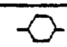 | 1 | 0 | −O− | S | R | 107 | − 3.22° (C=1.033) | H |
| ″ | ″ | ″ | ″ | ″ | ″ | R | R | 76 | −40.42° (C=1.024) | H |
| $n-C_{10}H_{21}$ | ″ | ″ | ″ | ″ | Single bond | R | R | 116 | − 3.57° (C=1.035) | H |
| ″ | ″ | ″ | ″ | ″ | ″ | S | R | (i) | +31.02° (C=1.038) | H |
| $CH_3$ | $n-C_7H_{15}$ | 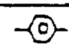 | ″ | ″ | −O− | R | S | 68 | + 0.35° (C=1.01) | H |
| ″ | ″ | ″ | ″ | ″ | ″ | S | S | 66 | +34.16° (C=1.013) | H |
| $n-C_5H_{11}$ | ″ | ″ | ″ | ″ | Single bond | R | R | 102 | − 5.66° (C=1.089) | H |
| ″ | ″ | ″ | ″ | ″ | ″ | S | R | 99 | +33.48° (C=1.027) | H |
| $n-C_7H_{15}$ | $n-C_8H_{17}$ | Single bond | 0 | 1 | ″ | R | R | 75 | − 3.72° (C=1.018) | H |
| ″ | ″ | ″ | ″ | ″ | ″ | S | R | 48 | +34.23° (C=1.00) | H |

(i) : C $\xrightarrow{71}$ SmX $\xrightarrow{113}$ I

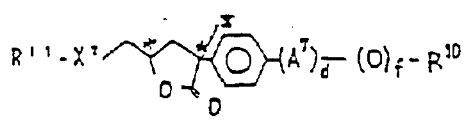 (V)

Table 10

| $R^{11}$ | $R^{10}$ | $A^7$ | d | f | $X^2$ | 2* | 4* | mp (°C) | $[\alpha]_D$ ($CH_2Cl_2$) | Z |
|---|---|---|---|---|---|---|---|---|---|---|
| n-$C_6H_{13}$ | n-$C_9H_{19}$ | 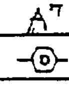 | 1 | " | -O- | R | S | 92 | +1.36° (C=1.06) | H |
| " | " | " | " | " | " | S | S | 64 | +29.27° (C=1.15) | H |
| n-$C_7H_{15}$ | " | " | " | " | Single bond | R | R | 126 | -5.42° (C=1.66) | H |
| " | " | " | " | " | " | S | R | (j) | +29.33° (C=0.95) | H |
| n-$C_6H_{13}$ | n-$C_7H_{15}$ | " | " | 0 | -O- | R | R | 48 | -37.95° (C=1.003) | H |
| " | " | " | " | " | " | S | R | 71 | -2.17° (C=1.070) | H |
| n-$C_8H_{17}$ | n-$C_9H_{19}$ | 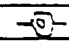 | 1 | 1 | Single bond | R | R | 95 | +13.24 (C=1.06) | $CH_3$ |
| n-$C_8H_{17}$ | n-$C_9H_{19}$ | 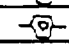 | 1 | 1 | " | S | R | 72 | +25.11 (C=1.017) | $CH_3$ |

(j) : C $\xrightarrow{96}$ SmC* $\xrightarrow{144}$ SmA $\xrightarrow{118}$ I

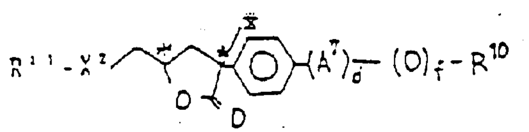 (V)

Table 11

| Compound No. | Structure | Transition Temperature (°C) | | | | |
|---|---|---|---|---|---|---|
| | | C | Sc | SA | N | I |
| No. 1 | 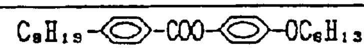 | · 41 | (· 37) | - | · 64 | · |
| NO. 2 | 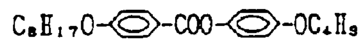 | · 58 | · 60 | - | · 89 | · |
| NO. 3 | 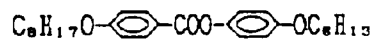 | · 55 | · 66 | - | · 90 | · |
| NO. 4 | 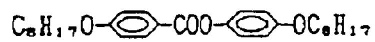 | · 61 | · 73 | - | · 90 | · |
| NO. 5 | 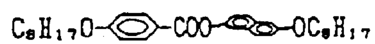 | · 70 | · 83 | - | ·132 | · |
| NO. 6 | 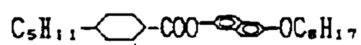 | · 55 | (·45) | ·104 | ·116 | · |
| NO. 7 | 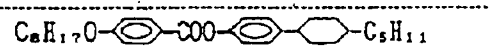 | · 82 | ·100 | - | ·183 | · |
| NO. 8 | 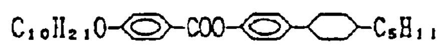 | · 73 | ·120 | ·127 | ·170 | · |
| NO. 9 | 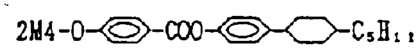 (RACEMIC) | · 97 | - | - | ·164 | · |
| NO. 10 | 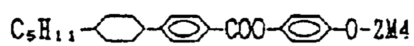 (RACEMIC) | ·105 | - | ·149 | ·164 | · |
| NO. 11 | 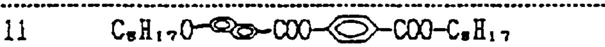 | · 90 | - | ·110 | - | · |

Table 12.

| | Composition No. 101 | Composition No. 102 | Composition No. 103 |
|---|---|---|---|
| Composition(wt%) | | | |
| No. 1 | 30.1 | 14.9 | 27.7 |
| NO. 2 | 15.1 | 15.1 | 13.5 |
| NO. 3 | 15.1 | 15.3 | 14.1 |
| NO. 4 | 9.8 | 9.8 | 18.6 |
| NO. 7 | | 7.5 | |
| NO. 8 | 9.8 | 9.9 | 8.8 |
| NO. 9 | 10.0 | 10.0 | 4.3 |
| NO. 10 | 10.0 | 9.8 | 4.4 |
| NO. 11 | | 7.7 | 8.6 |
| Transition Temperature (°C) | 51℃ 94℃<br>$S_C \rightarrow N \rightarrow I$ | 54℃ 78℃ 91℃<br>$S_C \rightarrow S_A \rightarrow N \rightarrow I$ | 51℃ 78℃ 91℃<br>$S_C \rightarrow S_A \rightarrow N \rightarrow I$ |

TABLE 13

Liquid Crystal Composition No. 201

Sc —51°C→ SA —63°C→ N —69°C→ I

| | |
|---|---|
| 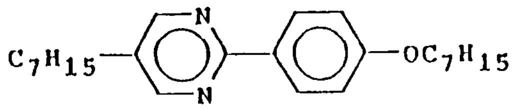 | 5% |
| 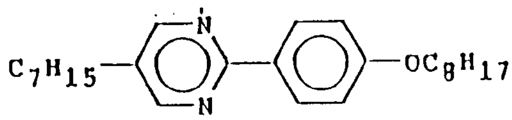 | 10% |
| 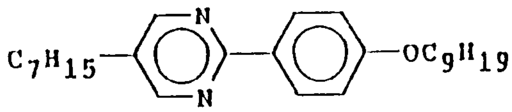 | 15% |
| 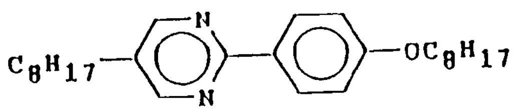 | 20% |
| 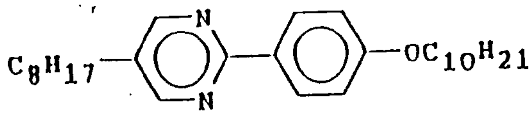 | 30% |
| 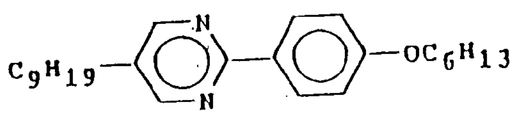 | 20% |

TABLE16

Lyquid Crystal Composition No. 202

| 60° C<br>N → I | |
|---|---|
| 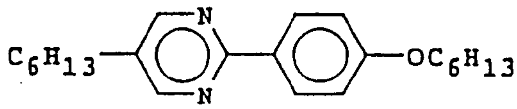 | 35% |
| 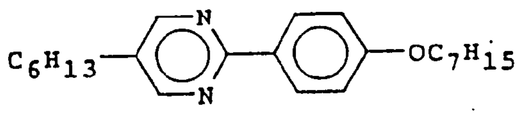 | 20% |
| 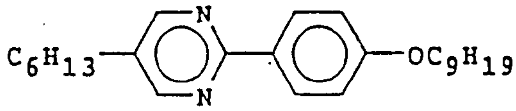 | 30% |
| 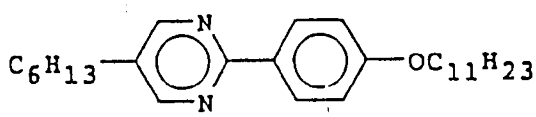 | 15% |

Table 14

| Compound No. | Structure | Spontasneous Polirization | Helical Sense in Nematic Phase | 1/P(1%) ( m-1) |
|---|---|---|---|---|
| No. 303 | (2S, 4S) 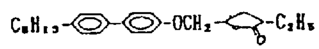 | – | L(-) | -0.0459 |
| No. 304 | (2S, 4S) 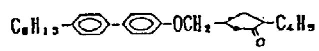 | – | L(-) | -0.0312 |
| No. 309 | (2R, 4S) 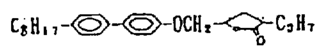 | – | L(-) | -0.0396 |
| No. 313 | (2S, 4S) 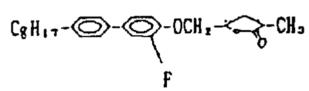 | – | R(+) | +0.0447 |
| No. 314 | (2R, 4S) 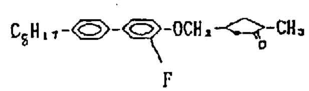 | – | L(-) | -0.0312 |
| No. 315 | (2S, 4S) 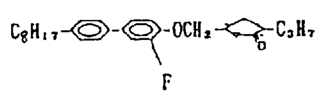 | – | R(+) | +0.0389 |
| No. 316 | (2R, 4S) 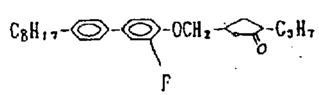 | – | L(-) | -0.0312 |
| No. 319 | (2R, 4S) 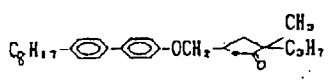 | – | L(-) | -0.0814 |
| No. 320 | (2S, 4S) 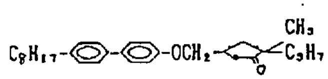 | – | L(-) | -0.0358 |
| No. 324 | (R) 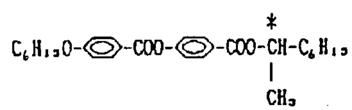 | – | R(+) | 0.0590 |
| No. 325 | (S) 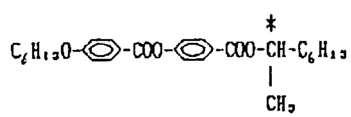 | + | L(-) | 0.0590 |

Table 15

| No. | Structure | Spontaneous Polarization | Helical Sense in Nematic Phase | 1/P (1%) ( $m^{-1}$ ) |
|---|---|---|---|---|
| No.301 | (2S,4S)$C_5H_{11}$ 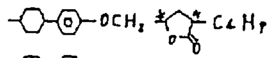 | — | L(-) | -0.0413 |
| No.302 | (2S,4S)$C_6H_{13}$ 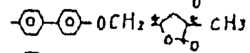 | — | L(-) | -0.0925 |
| No.305 | (2S,4S)$C_6H_{13}$ 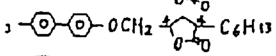 | — | L(-) | -0.0326 |
| No.307 | (2S,4S)$C_8H_{17}$ 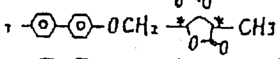 | — | L(-) | -0.0814 |
| No.308 | (2S,4S)$C_8H_{17}$ 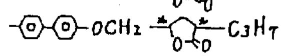 | — | L(-) | -0.0472 |
| No.310 | (2S,4S)$C_8H_{17}$ 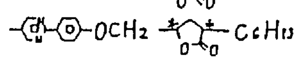 | — | L(-) | -0.0490 |
| No.306 | (2S,4S)$C_6H_{13}$ 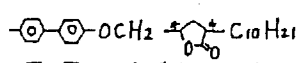 | — | L(-) | -0.0114 |
| No.317 | (2S,4S)$C_8H_{17}O$ 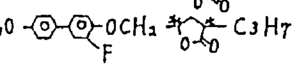 | — | R(+) | +0.0594 |
| No.318 | (2R,4S)$C_8H_{17}O$ 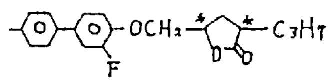 | — | L(-) | -0.0464 |
| No.311 | (2S,4S)$C_8H_{17}$ 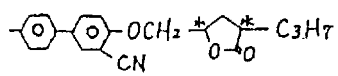 | — | L(-) | -0.0086 |
| No.312 | (2R,4S)$C_8H_{17}$ 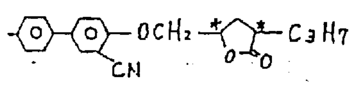 | — | L(-) | -0.1370 |
| No.321 | (2S,4R)$C_6H_{13}$-$OCH_2$ 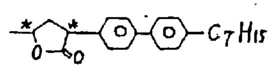 | — | R(+) | +0.0931 |
| No.322 | (2R,4R)$C_6H_{13}$-$OCH_2$ 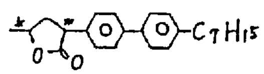 | — | R(+) | +0.0464 |
| No.323 | (S)$C_{11}H_{23}O$ 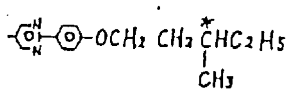 | — | R(+) | +0.0089 |

Table 17

| | Composition No. 401 | Composition No. 402 | Composition No. 403 | Composition No. 404 |
|---|---|---|---|---|
| No. 301 | | | 0.9 | 1.5 |
| No. 310 | | | 0.7 | |
| No. 311 | 4.7 | | | 1.0 |
| No. 315 | 1.0 | 3.0 | | 1.7 |
| No. 316 | | 2.9 | | |
| No. 320 | | | 0.8 | 0.4 |
| No. 321 | | | 1.1 | |
| No. 323 | | | | 1.5 |
| No. 5 | | | 7.3 | 5.6 |
| No. 6 | | | 4.6 | |
| No. 101 | 94.3 | 94.1 | | |
| No. 102 | | | 84.6 | |
| No. 103 | | | | 88.3 |

Table 19

| Composition | Orientation Film | Contrast in 1/3 bias driving method | Reference |
|---|---|---|---|
| No. 403 | PVA | 6.5 | Example 6 |
| No. 404 | PVA | 7.0 | Example 6 |
| No. 401 | LX-1400 | 7.5 | Example 7 |
| No. 402 | LX-1400 | 8.0 | Example 7 |
| No. 403 | LX-1400 | 6.0 | Example 7 |
| No. 404 | LX-1400 | 7.5 | Example 7 |
| No. 402 | PSI-A-2001 | 8.5 | Example 8 |
| No. 404 | PSI-A-2001 | 9.0 | Example 8 |

Table 18

| Composition | Transition Tem. Sc SA N I | Spontaneous Polarization ($nC/cm^2$) | Response Speed (μsec) 0→50% | 0→90% | 10→90% | Tilt angle θ(deg) | Memory angle 2ω(deg) | Memory Pulse width (μsec) 0 bias | 1/3 bias | 1/P ($\mu m^{-1}$) |
|---|---|---|---|---|---|---|---|---|---|---|
| No. 401 | · 51· 57· 88· | -16.8 | 134 | 194 | 182 | 23 | 11 | 200 | × | -0.0015 |
| No. 402 | · 51· 55· 89· | -13.2 | 113 | 138 | 42 | 24 | 18 | × | × | +0.0262 |
| No. 403 | · 57· 77·107· | | 310 | 534 | 390 | 24 | 11 | 280 | 230 | +0.0023 |
| No. 404 | · 44· 72· 90· | | 123 | 208 | 108 | 21 | 9 | 120 | 170 | -0.0054 |

## Claims

1. A ferroelectric liquid crystal composition comprising:
   at least one compound of the formula (I):

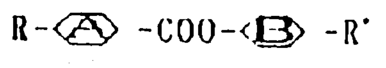

(I)

[where - A - represents 1,4-phenylene or 1,4-cyclohexylene group; - B - represents 1,4-phenylene or 2,6-naphthylene group; and R and R′ are, the same or different, a substituted or unsubstituted straight or branched chain alkyl or alkoxy group having 4-15 carbon atoms]
   at least one compound of the formula (II):

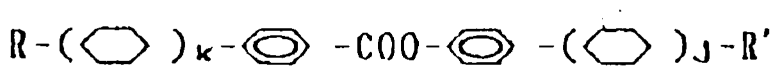

(II)

[where k and j are 0 or 1 and k + j = 1; and R and R′ have the same meaning as defined in the formula (I)]
   and
   at least one compound selected from the group consisting of a compound of the formula (IV):

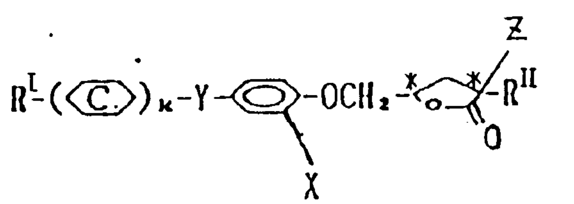

(IV)

[where $R^I$ represents a substituted or unsubstituted straight or branched chain alkyl or alkoxy group having 1-15 carbon atoms; $R^{II}$ represents a straight or branched chain alkyl group;

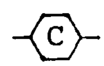

represents 1,4-cyclohexylene, 1,4-phenylene or 2,5-pyrimidinylene group; X is a hydrogen or halogen atom or a cyano group; Y is -COO- or a single bond; Z is a hydrogen atom or a methyl group; k is 0 or 1; and * represents an asymmetric carbon atom]
   and a compound of the formula (V):

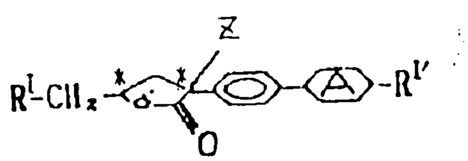

(V)

[where $R^1$ and $R^{1'}$ are each a substituted or unsubstituted straight or branched chain alkyl or alkoxy group having 1-15 carbon atoms;

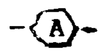

is 1,4-cyclohexylene or 1,4-phenylene group; Z is a hydrogen atom or a methyl group; and * represents an asymmetric carbon atom].

**2.** A ferroelectric liquid crystal composition as set forth in claim 1, further comprising atr least one compound of the formula (III):

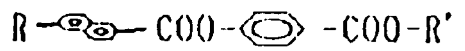 (III)

[where R and R′ are, the same or different, a substituted or unsubstituted straight or branched chain alkyl or alkoxy group having 4-15 carbon atoms].

**3.** A ferroelectirc liquid crystal composition as set forth in claim 1 or 2, which exhibits at least chiral nematic phase, smectic A phase and chiral smectic C phase.

**4.** A ferroelectric liquid crystal device comprising a pair of substrates for use in a liquid crystal device, each having on its surface at least an electrode layer and an orientation control layer stacked in that order,

said substrates being disposed in opposing relationship to have a clearance therebetween into which the ferroelectric liquid crystal composition of any of claims 1-3 is injected.

**5.** A ferroelectric liquid crystal device comprising a substrate for use in a liquid crystal display device, having at least a plurality of scanning electrodes arranged parallel on its surface and another substrate for use in a liquid crystal display device, having at least a plurality of signal electrodes arranged parallel on its surface, both of the substrates being disposed as opposed to each other with a clearance therebetween such that the scanning electrodes and the signal electrodes intersect with each other, the clearance being filled with the ferroelectric liquid crystal composition of any of claims 1-3;

said display device being driven by a method comprising:

defining ferroelectric liquid crystals in portions where the scanning electrodes and signal electrodes intersect with each other as pixels; and

applying, in line sequence, to the signal electrodes a signal voltage having a waveform corresponding to display data, while to the scanning electrodes a selective voltage having a waveform capable of rewriting the display of the pixels on the scanning electrodes;

wherein voltage that is one-third of that applied to the ferroelectric liquid crystals for rewriting the display of the pixels is applied to pixels of which display are not to be rewritten.

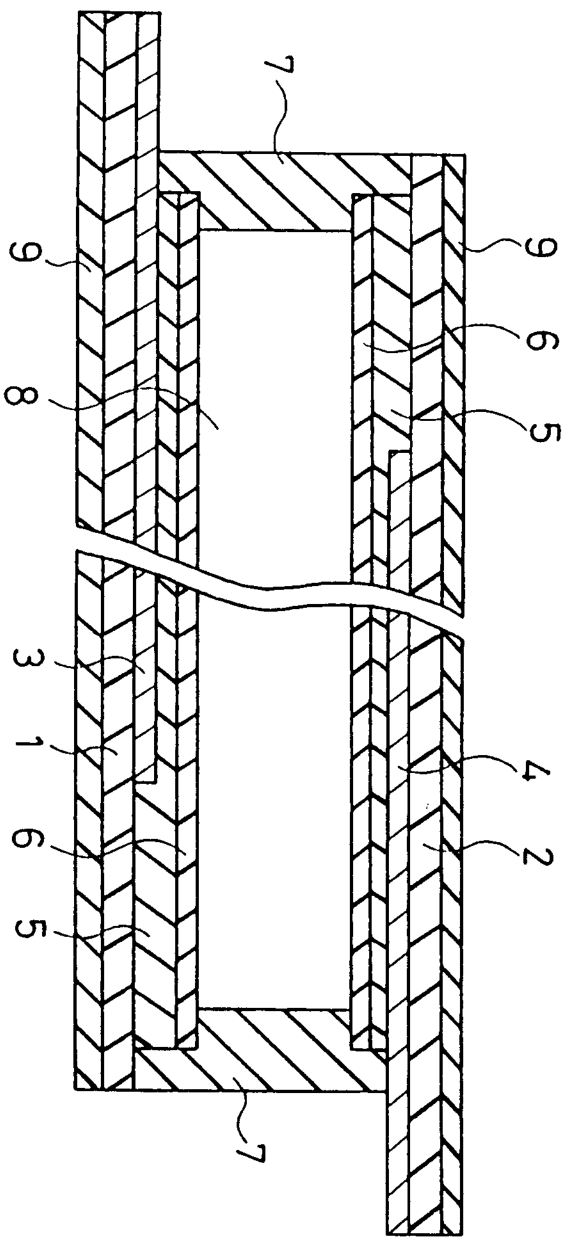


FIG. 1

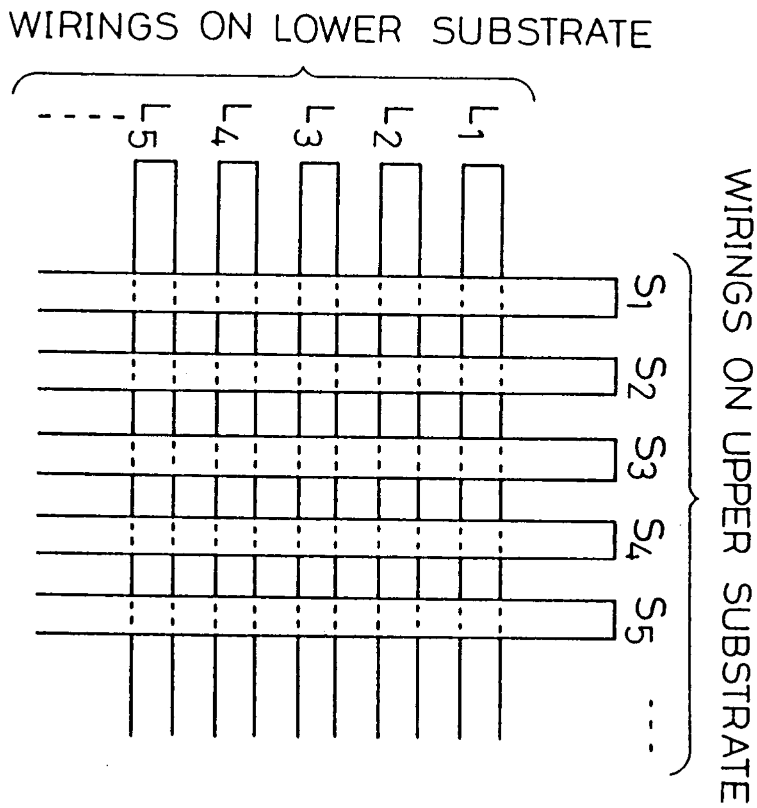
WIRINGS ON LOWER SUBSTRATE
L1
L2
L3
L4
L5
WIRINGS ON UPPER SUBSTRATE
S1
S2
S3
S4
S5

FIG.2

FIG. 3

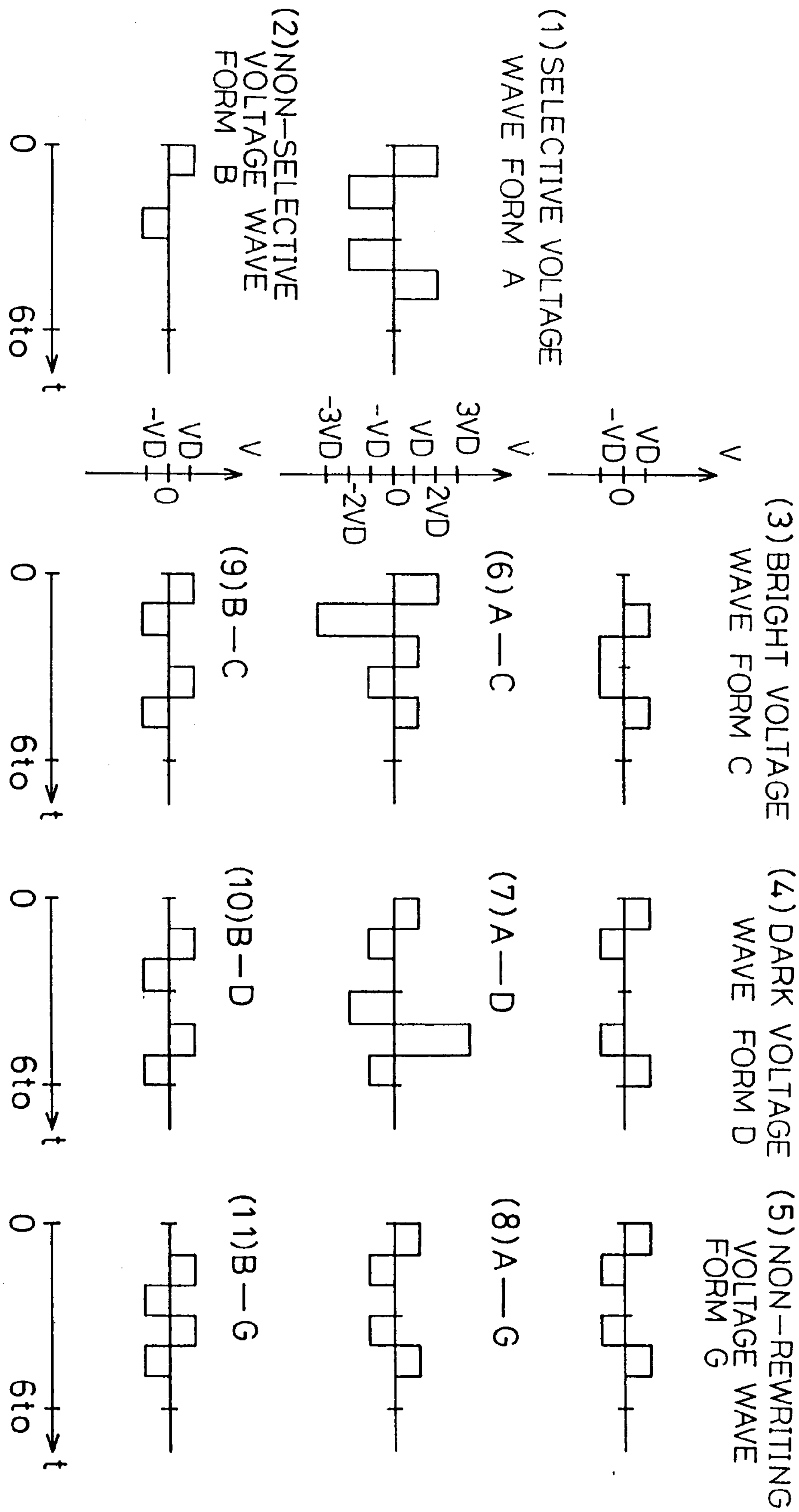
(1) SELECTIVE VOLTAGE WAVE FORM A
(2) NON-SELECTIVE VOLTAGE WAVE FORM B
(3) BRIGHT VOLTAGE WAVE FORM C
(4) DARK VOLTAGE WAVE FORM D
(5) NON-REWRITING VOLTAGE WAVE FORM G
(6) A—C
(7) A—D
(8) A—G
(9) B—C
(10) B—D
(11) B—G
V
VD
0
-VD
3VD
2VD
-2VD
-3VD
0
6to
t

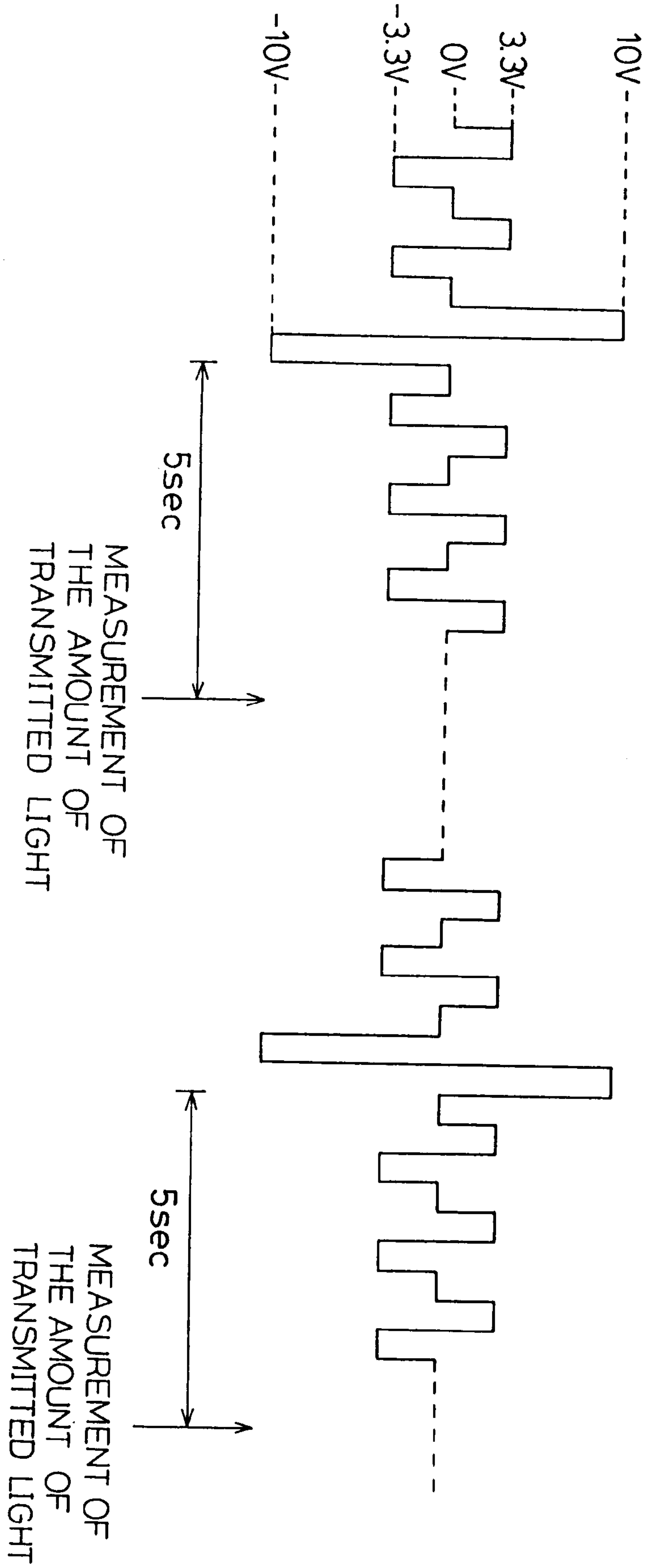
10V
3.3V
0V
-3.3V
-10V
5sec
MEASUREMENT OF
THE AMOUNT OF
TRANSMITTED LIGHT
5sec
MEASUREMENT OF
THE AMOUNT OF
TRANSMITTED LIGHT

FIG.4

European Patent Office

# EUROPEAN SEARCH REPORT

Application Number

EP 92 30 1230

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | EP-A-0 388 141 (SHARP)<br>* page 2, line 1 - line 3 *<br>* page 2, line 41 - line 52 *<br>* page 3, line 14 - page 4, line 52 *<br>* page 10, line 2 - line 33 *<br>* figures 1,2; tables 5,6,8,10 *<br>* compositions no. 35,49 *<br>* claims 1-5 *<br>--- | 1,3-5 | C09K19/46<br>C09K19/42 |
| X | EP-A-0 390 556 (SHARP)<br>* page 3, line 23 - line 51 *<br>* page 4, line 11 - line 26 *<br>* page 6, line 54 - page 7, line 29 *<br>* claims 1,4; figures 1,2; example 2 *<br>--- | 1,3-5 | |
| P,X | EP-A-0 442 504 (SHARP)<br>* page 3, line 5 - line 8 *<br>* composition 35 *<br>* tables 2,3,7-9 *<br>* claims 1,6; figures 1,2 *<br>--- | 1,3-5 | |
| A | PATENT ABSTRACTS OF JAPAN<br>vol. 12, no. 219 (C-506)22 June 1988<br>& JP-A-63 017 847 ( TORAY )<br>* abstract *<br>----- | 2 | TECHNICAL FIELDS SEARCHED (Int. Cl.5)<br>C09K |

The present search report has been drawn up for all claims

| Place of search | Date of completion of the search | Examiner |
|---|---|---|
| THE HAGUE | 19 MAY 1992 | PUETZ C. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)